(19) Europäisches Patentamt
European Patent Office
Office européen des brevets

(11) Publication number: 0 096 999 B1

(12) **EUROPEAN PATENT SPECIFICATION**

(45) Date of publication of patent specification: 16.04.86

(51) Int. Cl.[4]: A 01 N 57/32, A 01 N 57/28, C 07 F 9/24, C 07 F 9/44

(21) Application number: 83303161.0

(22) Date of filing: 01.06.83

(54) **Method for the control of insects which attack plants with phosphorus derivatives of carbamimidothioic acid esters.**

(30) Priority: 04.06.82 US 385157

(43) Date of publication of application: 28.12.83 Bulletin 83/52

(45) Publication of the grant of the patent: 16.04.86 Bulletin 86/16

(84) Designated Contracting States: AT BE CH DE FR IT LI LU NL SE

(56) References cited:
CENTRAL PATENTS INDEX, BASIC ABSTRACTS JOURNAL, Section C, AGDOC, week E42, 15th December 1982, abstract no. 89776, London, GB., N.N. MELNIKOV: "Phosphorylated tri:methyl-isothiourea derivs. in aq. acetone - used in form of aq. acetone soln. as agriculture insecticides and acaricides"

CHEMICAL ABSTRACTS, vol. 95, no. 15, 12th October 1981, page 633, no. 132447, Columbus, Ohio, USA, L. KURUC et al.: "Phosphorylated isothioureas. V. Preparation and properties of 3-phosphorylated and 3-thiophosphorylated 1,1,2-trisubstituted isothioureas"

(73) Proprietor: THE DOW CHEMICAL COMPANY
2030 Dow Center Abbott Road P.O. Box 1967
Midland, MI 48640 (US)

(72) Inventor: Reifschneider, Walter
3538 Bayberry Drive
Walnut Creek California (US)
Inventor: Paroonagian, Doris Lucy
1731 Shirley Drive
Pleasant Hill California (US)

(74) Representative: Allard, Susan Joyce et al
BOULT, WADE & TENNANT 27 Furnival street
London EC4A 1PQ (GB)

(56) References cited:
CHEMICAL ABSTRACTS, vol. 90, no. 7, 12th February 1979, page 570, no. 54501r, Columbus, Ohio, USA

JOURNAL OF GENERAL CHEMISTRY USSR, vol. 48, no. 8, August 1978, pages 1579-1583, Plenum Publishing Corp., L. YA. BOGEL'FER et al.: "Phosphorylated amidine systems. Synthesis and study of the stereoisomerism of phosphorylated isothioureas by means of PMR spectroscopy"

EP 0 096 999 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

(56) References cited:

CHEMICAL ABSTRACTS, vol. 62, no. 4, 15th February 1965, column 3921, point f, Columbus, Ohio, USA., P.I. ALIMOV et al.: "Derivatives of methyleneamide of diethyl phosphate"

CHEMICAL ABSTRACTS, vol. 66, no. 17, 24th April 1967, page 7081, no. 75644j, Columbus, Ohio, USA, N.N. LEVKOVA et al.: "On the synthesis of N-phosphoryliminothiocarbamic acid and N-phosphorylimidocarbamide derivatives"

**Description**

Various phosphorus derivatives of carbamimidothioic acid esters having pesticidal activity are known, such as those taught in Czechoslovakian Patent No. 172676.

Various phosphorus derivatives of carbamimidothioic acid esters are also disclosed in Chem Zvesti, Vol. 35(3) pages 373—387, 1981. This article states that the compounds synthesized do not show so high an insecticidal, acaricidal or ovicidal activity as the standard Malathion, Fenitrothion and Carbofenthion. The compounds were tested for activity only against the species *Musca domestica* and *Tetranychus urticae*.

SU-707232 discloses phosphoylated derivatives of trimethylisothiourea of the formula

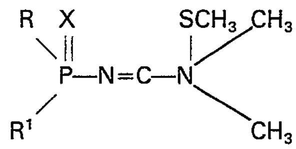

in which

R is methyl, ethyl, $CH_2Cl$ or ethoxy and

$R^1$ is ethoxy, phenoxy, chlorophenoxy, 2,4-dichlorophenoxy, 2,4,5-trichlorophenoxy or pentochlorophenoxy. These compounds are stated to be useful as insecticides and acaricides.

We have now found that certain phosphorus derivatives of carbomimidothioic acid esters are particularly effective for the kill and control of sucking and boring-type insects.

Accordingly, the present invention provides a method for the kill and control of sucking and boring-type insects which attack rice, fruit and nut trees, cotton, corn and vegetable plants employing compositions containing, as the active insecticide, at least one compound of the formula

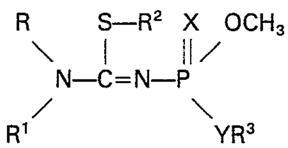

wherein

R and $R^1$ are each independently a methyl or ethyl group or

R and $R^1$ when taken together represent an alkylene group containing 4 to 6 carbon atoms or a group of the formula

$$-(CH_2CH_2)_2A$$

wherein

A is oxygen, sulfur or —NR, wherein R is as defined above;

$R^2$ and $R^3$ are each independently an alkyl group containing 1 to 4 carbon atoms and

X and Y represent oxygen or sulfur with the proviso that X and Y are not the same.

By the term "alkyl" as used herein is meant alkyl groups which are either straight chain or branched chain. Such groups are for example, methyl, ethyl, n-propyl, isopropyl, n-butyl, isobutyl or tertiary butyl.

The preferred compounds of the present invention are those wherein $R^2$ is methyl or ethyl. More preferred compounds are those wherein $R^2$ is methyl or ethyl and R and $R^1$ are independently either methyl or ethyl. Even more preferred compounds are those wherein $R^2$ is methyl or ethyl, R and $R^1$ are independently either methyl or ethyl and $R^3$ is methyl.

The active compounds employed in the method of the present invention are either oils or crystalline solids and are soluble in many common organic solvents.

In addition, the active compounds employed in the present invention are highly effective as plant systemic insecticides for the kill and control of sucking and boring-type insects.

The compounds employed in the present invention can be prepared by a variety of methods as follows:

Method A

Substantially equimolar amounts of an appropriate substituted carbamimidothioic acid ester of the formulae

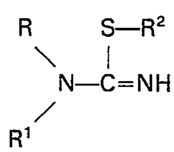

and an appropriate phosphorochloridothioic acid ester of the formulae

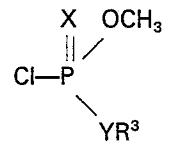

are reacted together in the presence of a solvent and a HCl acceptor.

In carrying out the reaction, the substituted carbamimidothioic acid ester and the phosphorus chloride reactants, the solvent and the HCl acceptor are mixed together in any convenient manner. The mixture is then stirred at a temperature between 15°C and gentle reflux until all of the phosphorus reactant is consumed.

Representative solvents include, for example, acetonitrile, cyclohexane, benzene, toluene, xylene, acetone, methylene chloride, methylethyl ketone, diethyl ether, dioxane and tetrahydrofuran.

Representative hydrogen chloride absorbers (acid-binding agents) include for example, alkali metal carbonates such as sodium and potassium carbonate and tertiary amines such as, for example, trimethylamine, triethylamine and pyridine.

At the completion of the reaction, the reaction mixture is filtered to remove any insolubles and the filtrate concentrated under reduced pressure. The residue is then taken up in ethyl ether, benzene, toluene, methylene chloride or chloroform and washed thoroughly with water and then with a saturated sodium chloride solution and dried. The solvent is removed by evaporation under reduced pressure leaving the desired product.

It should be noted that when using phosphorochloridothioic acid O,O-dimethyl ester, as a starting material, the expected reaction product, where X is sulfur and Y is oxygen, is contaminated with from 1 to 3 percent of the corresponding rearrangement product where X is oxygen and Y is sulfur.

Method B

Compounds wherein X is sulfur, Y is oxygen and $R^3$ is methyl can be prepared employing this method:

One mole of an appropriate N'-(dichlorophosphinothioyl)-N,N-substituted carbamimidothioic acid ester of the formulae

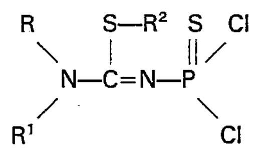

and substantially 2 moles of methanol are reacted together in the presence of a solvent and a HCl acceptor.

The reaction is conducted in a manner substantially the same as the reaction of Method A employing a temperature in the range of minus (−) 5°C to plus (+) 80°C. The solvents, the HCl acceptors and the method of recovery are the same as set forth in Method A.

Method C

Compounds wherein X is sulfur, and Y is oxygen can be prepared employing this method:

Substantially equimolar amounts of an appropriate N'(chloromethoxyphosphinothiol)-N,N-substituted carbamimidothioic acid ester of the formula

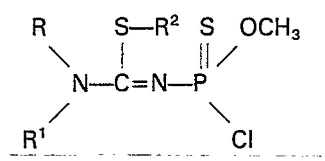

and a compound corresponding to the formula

$$HOR^3$$

are reacted together in the presence of a solvent and a HCl acceptor.

The reaction is conducted in a manner substantially the same as the reaction of Method A employing a temperature in the range of minus (−) 5°C to plus (+) 80°C. The solvents, the HCl acceptors and the method of recovery are the same as set forth in Method A.

Method D

Substantially equimolar amounts of N-(chloromethylthio)methylene-N-methylmethanaminium chloride of the formula

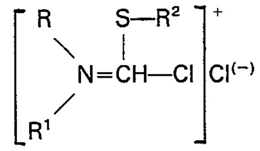

and a compound corresponding to the formula

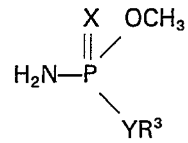

are reacted together in the presence of a solvent and a HCl acceptor.

The reaction is carried out in an inert solvent such as benzene, toluene or dioxane employing a temperature in the range of minus 5°C to plus (+) 30°C using triethylamine as the HCl acceptor. The method of recovery is the same as set forth in Method A.

Method E

Compounds wherein X is oxygen and Y is sulfur can be prepared by the rearrangement of the corresponding thiono compounds with the aid of an alkyl iodide or bromide.

The reaction scheme is as follows:

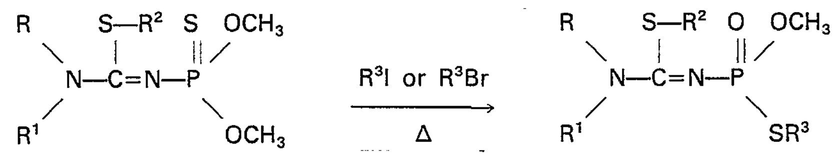


wherein R, $R^1$, $R^2$ and $R^3$ are as hereinbefore defined (the $R^3$ in the $R^3I$ or $R^3Br$ is the same as the $R^3$ in "$SR^3$").

In carrying out this reaction, one mole of an appropriate N' - dimethoxyphosphinothiol - N,N - substituted carbamimidothioic acid ester is mixed with from 1 to 3 moles of the appropriate alkyl iodide or bromide and the mixture heated under reflux for from 1 to 6 hours until the reaction is complete. The excess alkyl iodide or bromide is removed by distillation and the product purified by treatment with a solvent such as hexane or further distillation.

Method F

The compounds wherein X is oxygen and Y is sulfur can also be prepared by thermal rearrangement of the corresponding thiono compounds:

The reaction scheme is as follows:

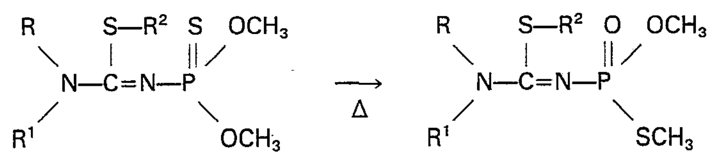


In carrying out this reaction, the appropriate N'-(alkoxy(methoxy)phosphinothiol)-N,N-substituted carbamimidothioic acid ester is distilled at a temperature of from 110° to 190°C and a reduced pressure of from 0.5 to 1.5 millimeters of mercury.

The following examples further illustrate the present invention.

Example I

A. Methyl N'-(dimethoxyphosphinothioyl)-N,N-dimethylcarbamimidothioate

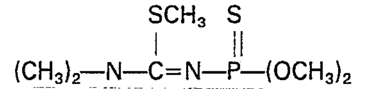

A mixture of 11.8 g of methyl N,N-dimethylcarbamimidothioate, 15 g of finely powdered potassium carbonate, 100 ml of acetonitrile and 16 g of O,O-dimethyl phosphorochloridothioate was stirred and heated to 35°C until all of the starting material was consumed. The insoluble salts which formed were then removed by filtration, the filtrate was concentrated under vacuum and the residue taken up in ether. The

ether solution was washed twice with water, once with a saturated sodium chloride solution and then dried over anhydrous sodium sulfate. The ether was removed in a rotary evaporator, leaving 14.6 g (60% of theoretical) of the methyl N' - (dimethoxyphosphinothiol) - N,N - dimethylcarbamimidothioate product as a nearly colorless oil. The product has a refractive index of

$$n_d^{25}=1.5677$$

(Compound 1).

B. The above product was also prepared by an alternative procedure.

A solution of 305 g of thiophosphoryl chloride in 700 ml of methylene chloride was cooled to 0°C and 213 g of methyl N,N-dimethylcarbamimidothioate was added dropwise, followed by a dropwise addition of 185 g of triethylamine. After the addition was complete, the mixture was stirred for one hour at room temperature and 900 ml of methanol was added and 400 g of triethylamine was introduced dropwise. The temperature was kept below 45°C during this reaction. After the addition was complete, the mixture was stirred at room temperature overnight. The triethylamine hydrochloride by-product was removed by filtration and the filtrate concentrated under vacuum. Ether was added to the residue and additional triethylammonium chloride thus formed was removed by filtration. The ether solution was then washed thrice with water, once with 5% aqueous sodium hydroxide, once with a saturated sodium chloride solution and then dried over anhydrous sodium sulfate. The ether was removed in a rotary evaporator, leaving 379 g (87% of theoretical) of the methyl N' - (dimethoxyphosphinothiol) - N,N - dimethylcarbamimidothioate product as a nearly colorless oil. The oil was filtered through silica gel to remove a trace turbidity. The product had a refractive index of

$$n_d^{25}=1.5677.$$

The oil solidified to a white crystalline solid which melted at 30—31°C. Analysis: Found: C, 29.85; H, 6.16; N, 11.55. Calculated for $C_6H_{15}N_2O_2PS_2$: C, 29.74; H, 6.24; N, 11.56.

Example II

A. Methyl N'-(methoxy(methylthio)phosphinyl)-N,N-dimethylcarbamimidothioate

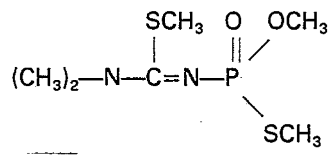

A mixture of 17.3 g of methyl N'-(dimethoxyphosphinothiol)-N,N-dimethylcarbamimidothioate and 100 ml of methyl iodide was heated under reflux for approximately 6 hours. The excess methyl iodide was then removed in a rotary evaporator. The residual oil was taken up in ether and the ether solution washed once with water, once with a saturated sodium chloride solution and then dried over anhydrous sodium sulfate. The ether was removed in a rotary evaporator leaving 13.0 g (75% of theoretical) of the methyl N' - (methoxy(methylthio) - phosphinyl) - N,N - dimethylcarbamimidothioate product as a pale amber colored oil. The product was recovered in a purity by GLC of 96% and had a refractive index of

$$n_d^{25}=1.5762.$$

The NMR and IR spectra are in agreement with the assigned structure. Analysis: Found: C, 28.32; H, 5.91; N, 11.85. Calculated for $C_6H_{15}N_2O_2PS_2$: C, 29.74; H, 6.24; N, 11.56 (Compound 2).

B. The above product was prepared by an alternative procedure. Methyl N' - (dimethoxyphosphinothioyl) - N,N - dimethylcarbamimidothioate (39.5 g) was twice distilled in a Kugelrohr distillation unit at a bath temperature of 160° and a pressure of 0.5 mm. After the first distillation 85% of the product was rearranged, after the second distillation, rearrangement was virtually complete. Yield, 34.5 g (87% of theoretical) of a colorless oil, having a refractive index of

$$n_d^{25}=1.5700.$$

Analysis: Found: C, 29.89; H, 6.19; N, 11.52. Calculated for $C_6H_{15}N_2O_2PS_2$: C, 29.74; H, 6.24; N, 11.56.

Example III

1-Methylethyl N'-(dimethoxyphosphinothioyl)-N,N-dimethylcarbamimidothioate

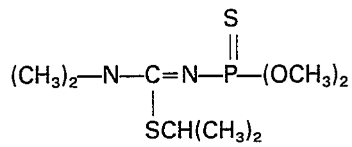

A mixture of 6.0 g of 1-methylethyl N,N-dimethylcarbamimidothioate, 8.5 g of finely powdered potassium carbonate, 120 ml of acetonitrile and 6.6 g of O,O-dimethyl phosphorochloridothioate was stirred and heated to 40°C for four hours. The insoluble salts which formed were then removed by filtration and the filtrate concentrated under vacuum. The residue was taken up in methylene chloride and the methylene chloride solution washed thrice with water and once with saturated sodium chloride solution and then dried over anhydrous magnesium sulfate. The solvent was removed in a rotary evaporator and a small amount of starting material was removed by heating the material in a Kugelrohr distillation unit to 80—85°C at a pressure of 0.2 mm. The 1-methylethyl N' - (dimethoxyphosphinothioyl) - N,N - dimethylcarbamimidothioate product was recovered in a yield of 6.2 g as an amber colored oil. This oil was extracted with hexane and the hexane removed under vacuum to give a nearly colorless oil. The product had a refractive index of

$$n_d^{25} = 1.5507.$$

Analysis: Found: C, 35.68; H, 7.05; N, 10.18. Calculated for $C_8H_{19}N_2O_2PS_2$: C, 35.54; H, 7.08; N, 10.36. (Compound 3).

Example IV

A. 1-Methylethyl N'-(methoxy(methylthio)phosphinyl)-N,N-dimethylcarbamimidothioate

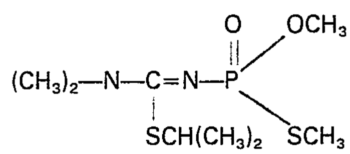

A mixture of 10.0 g of 1-methylethyl N,N-dimethylcarbamimidothioate, 15 g of finely powdered potassium carbonate, 100 ml of acetonitrile and 11.3 g of O,S-dimethyl phosphorochloridothioate was stirred without heating for 72 hours. The insoluble salts which formed were removed by filtration and the filtrate concentrated under vacuum. The residue was dissolved in ether and the ether solution washed twice with water and once with saturated sodium chloride solution and then dried over anhydrous magnesium sulfate. The ether was removed in a rotary evaporator, leaving 10.0 g of the 1-methylethyl N' - (methoxy(methylthio)phosphinyl) - N,N - dimethylcarbamimidothioate product as a yellow oil which was purified by chromatography on Florisil (60—100 mesh, ethanol/hexane 50/50) to give a colorless oil. Purity by GLC 97%. The IR and NMR spectra were in agreement with the structural assignment (Compound 4).

B. The above product was prepared by an alternative procedure. A solution of 6.6 g of 1-methylethyl N' - (dimethoxyphosphinothioyl) - N,N - dimethylcarbamimidothioate in 70 g of iodomethane was heated under reflux for 4 hours. The excess iodomethane was removed by distillation and the residual oil was extracted with hexane. The hexane was removed in a rotary evaporator to give the 1-methylethyl N' - (methoxy(methylthio)phosphinyl) - N,N - dimethylcarbamimidothioate product as a colorless oil. The product had a refractive index of

$$n_d^{25} = 1.5499.$$

Analysis: Found: C, 35.71; H, 6.96; N, 10.15. Calculated for $C_8H_{19}N_2O_2PS_2$: C, 35.54; H, 7.08; N, 10.36.

Example V

Methyl N'-(dimethoxyphosphinothioyl)-N,N-diethylcarbamimidothioate

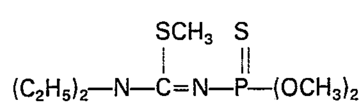

A mixture of 7.3 g of methyl N,N-diethylcarbamimidothioate, 8.0 of finely powdered potassium carbonate, 70 ml of acetonitrile and 8.0 g of O,O-dimethyl phosphorochloridothioate was stirred and heated at 40°C for four hours. The insoluble salts which formed were then removed by filtration and the filtrate concentrated under vacuum. The residue was taken up in ether and the ether solution washed twice with water and once with saturated sodium chloride solution and then dried over anhydrous sodium sulfate. The ether was removed under vacuum, leaving the methyl N' - (dimethoxyphosphinothioyl) - N,N - diethylcarbamimidothioate as a pale amber colored oil which has a refractive index of

$$n_d^{25}=1.5514$$

(Compound 5).

Example VI

Methyl N'-(ethylthio(methoxy)phosphinyl)-N,N-dimethylcarbamimidothioate

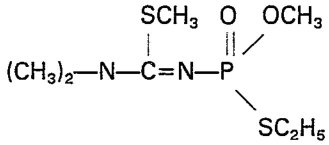

A mixture of 5.0 g of methyl N' - (dimethoxyphosphinothioyl) - N,N - dimethylcarbamimidothioate and 75 g of iodoethane was heated under reflux for 2½ hours. The excess iodoethane was removed in a rotary evaporator and the residual oil was distilled in a Kugelrohr distillation unit (bath temperature 150°C, pressure 0.1 mm) to give a colorless oil having a refractive index of

$$n_d^{25}=1.5576.$$

GLC and NMR indicated that the oily material is a mixture of about 75% of the desired methyl N' - (ethylthio(methoxy)phosphinyl) - N,N - dimethylcarbamimidothioate product and approximately 25% of methyl N' - (methoxy(methylthio)phosphinyl) - N,N - dimethylcarbamimidothioate (Compound 6).

Example VII

Methyl N'-(ethoxy(methoxy)phosphinothioyl)-N,N-dimethylcarbamimidothioate

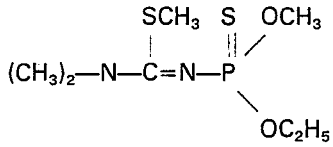

A mixture of 5.9 g of methyl N,N-dimethylcarbamimidothioate, 8 g of finely powdered potassium carbonate, 50 ml of acetonitrile and 8.7 g of O-ethyl O-methyl phosphorochloridothioate was stirred and heated to 40°C for 3 hours. The insoluble salts which formed were then removed by filtration and the filtrate concentrated under vacuum. The residue was taken up in ether and the ether solution washed twice with 5% aqueous sodium hydroxide and once with saturated sodium chloride solution and then dried over anhydrous sodium sulfate. The ether was removed in a rotary evaporator and the residue was distilled in a Kugelrohr distillation unit (bath temperature 95°C, pressure 0.2 mm) leaving 10.0 g (78% of theoretical) of the desired methyl N' - (ethoxy(methoxy)phosphinothioyl) - N,N - dimethylcarbamimidothioate product as an amber colored oil having a refractive index of

$$n_d^{25}=1.5597.$$

Analysis: Found: C, 32.49; H, 6.35; N, 11.02. Calculated for $C_7H_{17}N_2O_2PS_2$: C, 32.80; H, 6.69; N, 10.93 (Compound 7).

By following the preparative procedures as outlined in the above methods of preparation and the above examples and employing the appropriate starting materials, the following compounds were prepared.

TABLE I

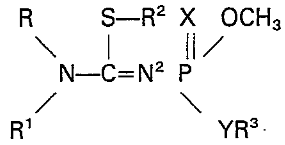

| Compound No. | $R^2$ | 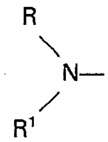 | X | $YR^3$ | Physical property: Refractive index or melting point °C |
|---|---|---|---|---|---|
| 8 | $—CH_3$ | $(C_2H_5)_2N—$ | O | $—SCH_3$ | $n_d^{25}$ = 1.5550 |
| 9 | $—n—C_3H_7$ | $(CH_3)_2N—$ | O | $—SCH_3$ | $n_d^{25}$ = 1.5557 |
| 10 | -Sec. $—C_4H_9$ | $(CH_3)_2N—$ | S | $—OCH_3$ | $n_d^{25}$ = 1.5461 |
| 11 | $—C_2H_5$ | $(CH_3)_2N—$ | O | $—SCH_3$ | $n_d^{25}$ = 1.5601 |
| 12 | $—C_2H_5$ | $(CH_3)_2N—$ | S | $OCH_3$ | $n_d^{25}$ = 1.5606 |
| 13 | $—C_4H_9$ | $(CH_3)_2N—$ | S | $—OCH_3$ | $n_d^{25}$ = 1.5424 |
| 14 | $—n—C_3H_7$ | $(CH_3)_2N—$ | S | $—OCH_3$ | $n_d^{25}$ = 1.5553 |
| 15 | $—CH_3$ | 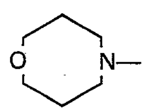 | O | $—SCH_3$ | $n_d^{25}$ = 1.5802 |
| 16 | $—CH(CH_3)_2$ | 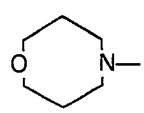 | O | $—SCH_3$ | oil |
| 17 | $—n—C_4H_9$ | 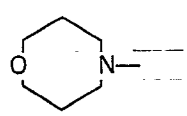 | S | $—OCH_3$ | oil |
| 18 | $—CH_3$ | 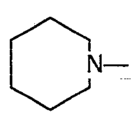 | S | $—OCH_3$ | $n_d^{25}$ = 1.5666 |
| 19 | $—CH_3$ | 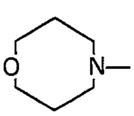 | S | $—OCH_3$ | $n_d^{25}$ = 1.5720 |

The compounds of the present invention are very effective for the control of the many sucking and boring-type insects found in the roots or aerial portions of growing rice plants.

Representative of the various sucking and boring-type insects which attack rice plants and which are killed and controlled by the active compounds employed in the present invention are members of the orders Homoptera, Thysanoptera, Hemiptera, Coleoptera, and Acarina. More specifically, kill and control is obtained for insects such as aphids (*Aphididae*) such as the green peach aphid (*Myzus persicae*), the bean aphid (*Aphis fabae*), the black cherry aphid (*Myzus ceraci*), the pea aphid (*Acythorsiphum pisum*) and the potato aphid (*Macrosiphum euphorbiae*), the current gall aphid (*Cryptomyzus ribis*), the mealy apple aphid (*Sappaphis mali*), the mealy plum aphid (*Hyalopterus pruni*), the cotton aphid (*Aphis gossypii*); the whiteflies (*Aleyrodidae*) including the banded wing whitefly (*Trialeurodes abutilonea*), grape whitefly (*Trialeurodes vittata*), greenhouse whitefly (*Trialeurodes vaporarium*) and sweet potato whitefly (*Bemisia tabacii*); scales such as the San Jose scale (*Aspidiotus perniciosus*), oyster scale (*Lepidosaphes ulnii*), the California red scale (*Aonidiella aurantii*), black scale (*Saissetia olea*), Terapin scale (*Lecanium sp*) and the oleander scale (*Aspidiotus hederae*); mealybugs (coccidae) such as the grape mealybug (*Pseudococcus maritimus*), greenhouse mealybug (*Pseudococcus sp*) and citrus mealybug (*Planococcus sp*); thrips (*Thysanoptera*) such as (*Hercinothrips femoralis*), gladiolus thrips (*Taeniothrips sp*), onion thrips (*Thrips tabacii*), greenhouse thrips (*Heliothrips sp*), flower thrips (*Frankliniella sp*) and rice thrips (*Chloethrips oryzae*); bugs, for example the beet bug (*Piesma quadrata*), squash bug (*Anasa sp*), harlequin bugs (*Murgantia histriconica*), (*Trigonotylus sp*), Corbett ricebug (*Leptocorixa corbetti*), slender ricebug (*Cletus trigonus*), black ricebug (*Scotinophora lurida*), plant bugs (*Lygus sp*), fleahoppers (*Halticus sp*), cotton fleahoppers (*Psallus sp*), the cotton bug (*Dysdercus intermedius*) and stinkbugs such as the southern green stinkbug (*Nezara viridulla*); leafhoppers and planthoppers, such as aster leafhopper (*Macrosteles fascifrons*), rice green leafhopper (*Nephotettix virescens*), zig zag leafhopper (*Recillia dorsalis*), (*Nephotettix apicalis*), white back planthopper (*Soqattella furcifera*), brown planthopper (*Nilaparvata lugens*), smaller brown planthopper (*Laodelphax striatellus*), grape leafhopper (*Erythroneura sp*), potato leafhopper (*Empoasca fabae*), apple sucker (*Psylla mali*), pear psylla (*Psylla pyricola*), potato psillid (*Paratrioxa cockerlelli*) and the like as well and rice water weevil (*Lissorhoptrus oryzophilus*); and borers such as the rice stemborer (*Chilo sp*), pink borer (*Sesamia sp*) and the paddy borers (*Tryporyza sp*).

In the present specification and claims, the term "systemic" defines the translocation of the active compound employed in the present method through the plant. The active compound can be applied either to the above-ground or preferably to below-ground portions of the plant.

The application of an insecticidally effective amount of an active compound of the present invention is critical to the method of the present invention. The active compound can sometimes be employed in unmodified form. Frequently, however, for easier application, the compound is modified by the employment with it of an adjuvant or inert carrier therefor. Thus, for example, many of the present compounds are very soluble in water and they are also relatively soluble in oils, including plant essential oils. Therefore, the practical enjoyment of the beneficial utilities of the present compound often requires that the compound be composited with one or more adjuvant substances which are chemically inert to the active compound, and the resulting compositions are comprehended within the present invention.

The compositions can be formulated in various forms, such as emulsifiable concentrates, wettable powders, flowable suspension dusts, granules, micro-encapsulated granules, fine granules, oil sprays, aerosols, and the adjuvant employed can be any one or a plurality of materials including aromatic solvents, petroleum distillates, water, or other liquid carriers, propellant substances, surface-active dispersing agents, light absorbers, and finely divided carrier solids. In such compositions, the adjuvant cooperates with the active compound so as to obtain a composition to facilitate the method of the present invention, and to obtain an improved result. The use of either a surface-active dispersing agent or a finely divided carrier solid and the use of both a surface-active dispersing agent and a finely divided carrier solid, simultaneously, constitute preferred embodiments of the method of the present invention. Another preferred embodiment of the present invention is a composition comprising one or more of the presently claimed compounds, an organic liquid as a solvent and carrier therefor, and a propellant material. Numerous other embodiments will become available to those skilled in the art in view of the teachings set forth hereinbelow.

The exact concentration of the active compound in a composition thereof with an adjuvant therefor can vary; it is only necessary that the active compounds be present in a sufficient amount so as to make possible the application of an insecticidally effective dosage. Generally, for practical applications, the active compounds can be broadly applied to the plants or to the soil around the roots of the plants or to water, such as in broadcast rice paddy applications in compositions containing from 0.00001 percent to 98 percent by weight of the active compound.

In preparation of dust compositions, the product can be compounded with any of the finely divided carrier solids such as pyrophyllite, diatomaceous earth, gypsum and the like. In such operations, the finely divided carrier is ground or mixed with the active compound, as active agent, or wetted with a solution of the active agent in a volatile organic solvent. Similarly, dust compositions containing the active product can be similarly compounded from various of the solid dispersing agents, such as fuller's earth, attapulgite and other clays. These dust compositions can be employed as treating compositions or can be employed as concentrates and subsequently diluted with additional solid dispersing agent or with pyrophyllite,

diatomaceous earth, gypsum and the like to obtain the desired amount of active agent in a treating composition. Also, such dust compositions can be dispersed in water, with or without the aid of surfactant, to form spray mixtures.

Further, the active compound or a dust concentrate composition containing said compound can be incorporated in intimate mixture with surface active dispersing agents such as ionic and nonionic emulsifying agents to form spray concentrates. Such concentrates are readily dispersible in liquid carriers to form sprays containing the toxicant in any desired amount. The choice of dispersing agent and amount thereof employed are determined by the ability of the agent to facilitate the dispersion of the concentrate in the liquid carrier to produce the desired spray composition.

In the preparation of liquid compositions, the active compound can be compounded with a suitable water-immiscible organic liquid and a surface-active dispersing agent to produce an emulsifiable liquid concentrate which can be further diluted with water and oil to form spray mixtures in the form of oil-in-water emulsions. In such compositions, the carrier comprises an aqueous emulsion, that is, a mixture of water-immiscible solvent, emulsifying agent and water. Preferred dispersing agents to be employed in these compositions are oil-soluble and include the nonionic emulsifiers such as the polyoxyethylene derivatives of sorbitan esters, complex ether alcohols and the like. However, oil-soluble ionic emulsifying agents such as mahogany soaps can also be used. Suitable organic liquids to be employed in the compositions include petroleum oils and distillates, toluene liquid halohydrocarbons and synthetic organic oils. The surface-active dispersing agents are usually employed in liquid compositions in the amount of from 0.1 to 20 percent by weight of the combined weight of the dispersing agent and active compound.

When operating in accordance with the present invention, the active compound or a composition containing the active compound is applied to the plants or to their habitat in any convenient manner, for example, by means of hand dusters or sprayers. Application to the foliage of the plants is conveniently carried out with power dusters, boom sprayers and fog sprayers. In such foliar applications, the employed compositions should not contain any appreciable amounts of any phytotoxic diluents. In large scale operations, dusts, or low-volume sprays can be applied from an airplane.

In further embodiments, one of the compounds of the present invention or compositions containing the same, can be advantageously employed in combination with one or more additional pesticidal compounds. Such additional pesticidal compounds may be insecticides, nematocides, arthropodicides, herbicides, fungicides or bactericides that are compatible with the compounds of the present invention in the medium selected for application and not antagonistic to the activity of the present compounds. Accordingly, in such embodiments, the pesticidal compound is employed as a supplemental toxicant for the same or for a different pesticidal use, or as an additament. The compounds in combination can generally be present in the ratio of from 1 to 99 parts of the compound of the present invention with from 99 to 1 part of the additional compound(s).

Dosage amounts are generally from 15—1,000 grams (g) preferably from 40—600 g of active compound and most preferably from 125—500 g of active compound per hectare. However, in special cases, it is possible to exceed or reduce the amount and this may sometimes be necessary.

Example VIII

Aqueous dispersions were prepared by admixing one of the hereinafter set forth compounds, dissolved in a suitable inert solvent with a predetermined quantity of water and a predetermined amount of a surfactant to give aqueous dispersions containing varying predetermined amounts of one of the compounds as the sole toxicant. Separate chili pepper plants were infested with green peach aphids. A predetermined volume of chemical was injected into the root zone area of the plant. In a like manner, green peach aphids were placed on control plants and the root zone area of the plants was injected with a solution containing only water and surfactant. The plants were maintained under conditions conducive to the growth of the plants and aphids. After a period of three days, the plants were examined to determine the minimum concentration in parts of the active compound per million parts of the ultimate dispersion necessary to give at least a 95 percent systemic kill and control of the green peach aphids. The results of this examination are set forth below in Table II.

TABLE II

| Number of active compound | Minimum concentration in ppm of active compound in dispersion to give $LC_{95}$ for the systemic control of green peach aphid |
|---|---|
| 1 | 25 |
| 2 | >6.2 to <25 |
| 3 | 400 |
| 5 | >400 |

Example IX

Aqueous dispersions were prepared by admixing one of the hereinafter set forth compounds with a predetermined quantity of water and a predetermined amount of a surfactant to give aqueous dispersions containing varying predetermined amounts of one of the compounds as the sole toxicant.

Separate rice plants were dipped into one of the dispersions and permitted to dry.

A plastic cylinder was placed around each of the plants and 10 adult Aster leafhoppers were placed in the cylinder and the cylinder capped. In a like manner, 10 adult Aster leafhoppers were placed on control plants which had been dipped in a solution containing only water and surfactant. The plants were maintained under conditions conducive to the growth of the plants and leafhoppers. After a period of three days, the cylinder and plants were examined to determine the minimum concentration in parts of the active compound per million parts of the ultimate dispersion necessary to give at least 95 percent kill and control of the Aster leafhopper. The results of this examination are set forth below in Table III.

TABLE III

| Number of active compound | Minimum concentration in ppm of active compound in dispersion to give $LD_{95}$ for foliar control of Aster leafhoppers |
|---|---|
| 1 | 25 |
| 2 | 6.2 |
| 3 | 100 |
| 4 | 25 |
| 5 | 100 |
| 6 | 6.2 |
| 7 | 150 |
| 8 | 25 |
| 9 | 25 |
| 10 | 400 |
| 11 | 6.2 |
| 12 | >25 to <100 |
| 13 | 100 |
| 14 | 100 |
| 15 | 25 |

Example X

Aqueous dispersions were prepared by admixing one of the hereinafter set forth compounds with a predetermined quantity of water and a predetermined amount of a surfactant to give aqueous dispersions containing varying predetermined amounts of one of the compounds as the sole toxicant.

Separate rice plants were treated by adding a predetermined amount of one of the test dispersions to the root of the plant to determine systemic activity.

A plastic cylinder was placed around each of the plants and 10 adult Aster leafhoppers were placed in the cylinder and the cylinder capped. In a like manner, 10 adult Aster leafhoppers were placed on control plants which were treated at the root zone with a solution containing only water and surfactant. The plants were maintained under conditions conducive to the growth of the plants and leafhoppers. After a period of three days, the cylinder and plants were examined to determine the minimum concentration in parts of the active compound per million parts of the ultimate dispersion necessary to give at least 95 percent kill and control of the Aster leafhopper. The results of this examination are set forth below in Table IV.

TABLE IV

| Number of active compound | Minimum concentration in ppm of active compound in dispersion to give $LD_{95}$ for systemic control of Aster leafhoppers |
|---|---|
| 1 | 25 |
| 2 | 0.38 |
| 3 | 100 |
| 4 | 25 |
| 5 | 400 |
| 6 | <1.5 |
| 7 | 200 |
| 8 | 25 |
| 9 | 25 |
| 10 | 400 |
| 11 | 1.5 |
| 12 | >25 to <100 |
| 13 | >25 to <100 |
| 14 | >25 to <100 |
| 15 | >6.2 to <25 |

Example XI

Aqueous dispersions were prepared by admixing one of the hereinafter set forth compounds with a predetermined quantity of water and a predetermined amount of a surfactant to give aqueous dispersions containing varying predetermined amounts of one of the compounds as the sole toxicant.

Separate rice plants were dipped into one of the dispersions and permitted to dry.

A plastic cylinder was placed around each of the plants and 10 adult brown planthoppers were placed in the cylinder and the cylinder capped. In a like manner, 10 adult brown planthoppers were placed on control plants which had been dipped in a solution containing only water and surfactant. The plants were maintained under conditions conducive to the growth of the plants and planthoppers. After a period of three days, the cylinder and plants were examined to determine the minimum concentration in parts of the active compound per million parts of the ultimate dispersion necessary to give at least 90 percent kill and control of the brown planthopper. The results of this examination are set forth below in Table V.

TABLE V

| Number of active compound | Minimum concentration in ppm of active compound in dispersion to give $LD_{90}$ for foliar control of brown planthoppers |
|---|---|
| 1 | 25 |
| 2 | 6.25 |

Example XII

Aqueous dispersions were prepared by admixing one of the hereinafter set forth compounds with a predetermined quantity of water and a predetermined amount of a surfactant to give aqueous dispersions containing varying predetermined amounts of one of the compounds as the sole toxicant.

Separate rice plants were treated by adding a predetermined amount of one of the test dispersions to the root of the plant to determine systemic activity.

A plastic cylinder was placed around each of the plants and 10 adult brown planthoppers were placed in the cylinder and the cylinder capped. In a like manner, 10 adult brown planthoppers were placed on control plants which were treated at the root zone with a solution containing only water and surfactant. The plants were maintained under conditions conducive to the growth of the plants and planthoppers. After a period of three days, the cylinder and plants were examined to determine the minimum concentration in parts of the active compound per million parts of the ultimate dispersion necessary to give at least 90 percent kill and control of the brown planthopper. The results of this examination are set forth below in Table VI.

TABLE VI

| Number of active compound | Minimum concentration in ppm of active compound in dispersion to give $LD_{90}$ for systemic control of brown planthoppers |
|---|---|
| 1 | 6.25 |
| 2 | 1.6 |

Example XIII

Aqueous dispersions were prepared by admixing one of the compounds of the present invention, dissolved in a suitable inert solvent, with a predetermined quantity of water and a predetermined amount of a surfactant to give aqueous dispersions containing varying predetermined amounts of the compound as the sole toxicant.

Separate cotton plants were infested with several hundred one week old, banded-wing whitefly nymphs. Plants were sprayed to run off with each of the dispersions. In a like manner several hundred nymphs were infested onto a control plant and the plants sprayed to run off with a solution containing only water and surfactant. The plants were maintained under conditions conducive to the growth of the plants and insects. After a period of 21 days, the plants were examined to determine the percent control at the various concentrations of the toxicant applied. Percent control was determined by the number of nymphs which did not successfully emerge as adults. The results of this examination are set forth below in Table VII.

TABLE VII

| Number of active compound | Percent control of banded-wing whitefly nymphs by foliar application to cotton plants at the indicated dosage rate in PPM | | | |
|---|---|---|---|---|
| 2 | 25 | 6.2 | 3.1 | 0 |
| | 100 | 97 | 75 | 0 |

Example XIV

Aqueous dispersions were prepared by admixing one of the compounds of the present invention, dissolved in a suitable inert solvent, with a predetermined quantity of water and a predetermined amount of surfactant to give aqueous dispersions containing varying predetermined amounts of the compound as the soil toxicant.

Separate cotton plants were infested with several hundred one week old banded-wing whitefly nymphs and a predetermined volume of the test dispersion was injected into the root zone of plants to determine systemic insecticidal effects. In like manner, several hundred nymphs were infested onto control plants and a solution containing only water and surfactant was injected into the root zone. The plants were maintained under conditions conducive to the growth of the plants and whitefly nymphs. After a period of 21 days, the plants were examined to determine the percent control at the various concentrations of the toxicant applied. Percent control was determined by the number of nymphs which did not successfully emerge as adults. The results of this examination are set forth below in Table VIII.

TABLE VIII

| Number of active compound | Percent control of banded-wing whitefly nymphs by root zone application to cotton plants at the indicated dosage rate in PPM | | | |
|---|---|---|---|---|
| 2 | 100/100 | 25/97 | 6.2/95 | 0/0 |

Example XV

Aqueous dispersions were prepared by admixing one of the compounds of the present invention, dissolved in a suitable inert solvent, with a predetermined quantity of water and a predetermined amount of surfactant to give aqueous dispersions containing varying predetermined amounts of the compound, as the sole toxicant.

Separate corn plants were infested with 50—75 adults and nymphs of the corn leaf aphid, *Aphis maidis*. These aphids generally feed and aggregate only on the lower portion of the corn stalk. A sufficient quantity of each chemical dispersion was sprayed onto the upper leaf portions of the corn plant, taking care not to contaminate the lower portion of stalk with the chemical spray. Plants were then allowed to dry upside down to prevent run-off onto aphid feeding zone. In a like manner a set of control plants were also treated using a solution containing only water and surfactant. The treated plants were maintained under conditions conducive to the growth of the plants and insects. After a period of 12 days the plants were examined to determine the percent control at the various concentrations of the toxicant applied. Percent control was determined by the number of live aphids on the test plants versus the number of live aphids on the control. The results of this examination are set forth below in Table IX.

TABLE IX

| Number of active compound | Percent control of the corn leaf aphid, *Aphis maidis*, through downward translocation of the insecticide on corn at the indicated dosage in PPM | | | |
|---|---|---|---|---|
| 2 | 400/100 | 200/50 | 100/0 | 0/0 |

When applied at a dosage level as hereinabove set forth, each of the compounds of the present invention, the utility of which is not specifically exemplified hereinabove, has the ability to kill, inhibit or otherwise control one or more of the above said or other fungal or insect pests.

The substituted carbamimidothioic acid esters corresponding to the formula

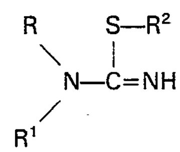

wherein R, $R^1$, and $R^2$ are as hereinbefore defined are for the most part known compounds and can be prepared by the reaction of an appropriate carbothioamide corresponding to the formula

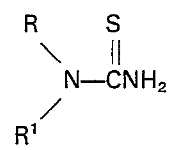

with the appropriate alkyl halide followed by treatment of the corresponding S-alkyl-N,N-substituted isothiourea hydrogen halide salt thus formed with a base to obtain the desired carbamimidothioic acid ester as the free base.

In carrying out this reaction, the alkylhalide reactant is slowly added to a mixture of the carbothioamide reactant and a solvent such as methanol, ethanol or toluene. The mixture is then heated under reflux until the reaction is complete (from 1 to 4 hours or more). The reaction mixture is heated under reduced pressure to remove most of the solvent and the product is recovered by filtration.

The product which is in the form of the hydrogen halide salt can be treated directly with a base such as, a dilute aqueous sodium or potassium hydroxide solution or if desired, the product can be separated and purified by recrystallization from one of the solvents listed above and then treated with the base to obtain the product as the free base.

The substituted carbothioamides corresponding to the formula

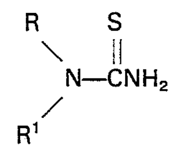

wherein R and $R^1$ are as hereinbefore defined are for the most part known compounds and can be prepared in a two-step process. In the first step, substantially equimolar amounts of tertiary butyl isothiocyanate and an appropriate amine are reacted together in the presence of a solvent. The thus formed tertiary butyl thiourea is then treated with concentrated hydrochloric acid to remove the tertiary butyl group leaving the desired compound.

In carrying out this reaction, the tertiary butyl isothiocyanate is very slowly added to a stirred solution of the amine reactant in a solvent such as hexane, benzene or toluene which is at a temperature of from −10° to 20°C. The stirring mixture is allowed to warm up to room temperature (½ to 2 hours) and the product precipitates out and is recovered by filtration. The product can be purified if desired by recrystallization from a solvent such as ethanol, hexane, benzene or toluene.

The thiourea product, prepared as above, is admixed with from 2 to 4 moles of concentrated hydrochloric acid and the mixture heated to a temperature of from 50° to 95°C. The heating is conducted until all of the thiourea reactant is dissolved. The tertiary butyl chloride is then distilled off. The solution is cooled to ~20°C and made basic by the addition of aqueous sodium hydroxide. The desired product is then recovered by filtration. The product can be purified, if desired, by water washing and/or recrystallization of from a solvent such as ethanol or hexane.

The N'-(disubstitutedphosphinyl)-N,N-substituted carbamimidothioic acid esters which correspond to the formula

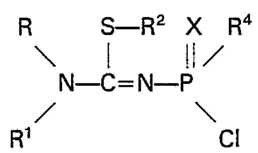

wherein R, $R^1$, $R^2$, and X are as hereinbefore defined and $R^4$ is Cl or $OCH_3$ and which are employed as starting materials can be prepared by a method wherein substantially equimolar amounts of an appropriate substituted carbamimidothioic acid ester of the formula

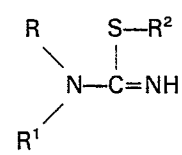

and either a thiophosphoryl halide

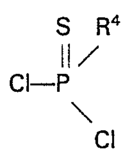

or

a phosphorus oxyhalide

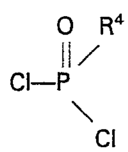

are reacted together in the presence of a solvent and a HCl acceptor.

The reaction is conducted in a manner substantially the same as the reaction of Method A employing temperatures in the range of minus (−) 10° to 50°C. The solvents, the HCl acceptors and the method of recovery are the same as set forth in Method A.

Example XVI
Methyl N-(dichlorophosphinyl)-N,N-dimethylcarbamimidothioate

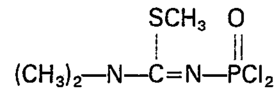

A solution of 11.8 g of methyl N,N-dimethylcarbamimidothioate in 125 ml of methylene chloride was stirred, cooled to −10°C and first 15.3 g of phosphorus oxychloride and then 10.1 g of triethylamine were added dropwise. Stirring was continued at −10°C for one hour and at room temperature for another hour. The mixture was filtered, the filtrate washed thrice with 75 ml portions of ice-water and dried over anhydrous magnesium sulfate. The solvent was removed in a rotary evaporator leaving 18.2 g of a clear oil. The NMR spectra indicated the desired product containing a small amount of an impurity. To obtain high purity product, the oil was dissolved in a small amount of methylene chloride and reprecipitated by the addition of hexane. The solvent layer was decanted and the residue freed from solvent in a rotary evaporator, leaving 13.0 g of a pale yellow colored oil, RI(25°)=1.5690. The IR and NMR spectra are in agreement with the desired structure.

| | |
|---|---|
| Analysis: | |
| Calcd. for $C_4H_9Cl_2N_2OPS$: | C, 20.44; H, 3.86; N, 11.92 |
| Found: | C, 20.70; H, 3.86; N, 12.12 |

Example XVII
Methyl N-(dichlorophosphinothioyl)-N,N-dimethylcarbamimidothioate

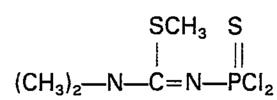

A solution of 11.8 g of methyl N,N-dimethylcarbamimidothioate in 200 ml of methylene chloride was stirred, cooled to 5°C and first 16.9 g of thiophosphoryl chloride and then 10.1 g of triethylamine were added dropwise. Stirring at 5°C was continued for one hour and at room temperature for 4 hours. The mixture was filtered, the filtrate washed thrice with 50 ml portions of water and dried over anhydrous magnesium sulfate. The solvent was removed in a rotary evaporator leaving 23.7 g of a brown colored oil, RI(25°)=1.6196. The NMR spectra was in agreement with the desired structure.

| | |
|---|---|
| Analysis: | |
| Calcd. for $C_4H_9Cl_2N_2PS_2$: | C, 19.13; H, 3.61; N, 11.16 |
| Found: | C, 19.92; H, 3.76; N, 11.10 |

Example XVIII
Methyl N-(chloromethoxyphosphinothioyl)-4-morpholinecarboximidothioate

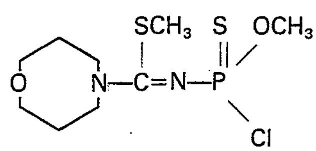

A solution of 17.5 g of O-methyl phosphorodichloridothioate in 125 ml of acetonitrile was stirred, cooled to 5°C and 16.0 g of methyl 4-morpholinecarboximidothioate was added in portions. Cooling was discontinued after the addition was complete and the mixture was stirred at room temperature for 4 hours. The reaction mixture was concentrated under vacuum, the residue dissolved in methylene chloride, the methylene chloride solution washed twice with 100 ml portions of water, once with saturated sodium chloride solution and dried over anhydrous magnesium sulfate. The solvent was removed under vacuum leaving 18.9 g of a reddish colored oil. The NMR spectra indicated the desired product.

Example XIX
Methyl N-(dichlorophosphinyl)-4-morpholinecarboximidothioate

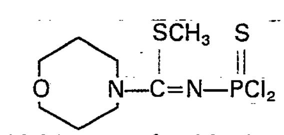

To a solution of 16.94 g of thiophosphoryl chloride and 16.0 g of methyl 4-morpholinecarboximidothioate in 250 ml of methylene chloride was added at 5°C, 10.2 g of triethylamine. The mixture was stirred at room temperature for 4 hours, the triethylamine hydrochloride removed by filtration and the filtrate washed with three 50 ml portions of water. The solution was dried over anhydrous magnesium sulfate, the solvent removed under vacuum leaving an oil which crystallized on standing and was recrystallized from a small amount of methylene chloride and hexane. White crystals, m.p. 79—81° were obtained in 19.5 g yield. The IR and NMR spectra are in agreement with the desired structure.

| | |
|---|---|
| Analysis: | |
| Calcd. for $C_6H_{11}Cl_2N_2OPS_2$: | C, 24.58; H, 3.78; N, 9.56 |
| Found: | C, 25.20; H, 4.02; N, 9.69 |

Example XX
Methyl N-(chloromethoxyphosphinothioyl)-N,N-dimethylcarbamimidothioate

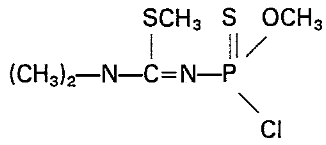

A stirred solution of 33 g of O-methyl phosphorodichloridothioate in 200 ml of acetonitrile was cooled to 5°C and 23.64 g of methyl N,N-dimethylcarbamimidothioate was added dropwise. After the addition was complete, the mixture was stirred at approximately 5°C for two hours. The solvent was then removed in a rotary evaporator, the residue dissolved in methylene chloride, the methylene chloride solution washed with four 50 ml portions of water and dried over anhydrous magnesium sulfate. The solvent was then removed under vacuum and the residue taken up in a minimum amount of methylene chloride. To this solution hexane was added to precipitate the product as an oil. The supernatant liquid was decanted and the remaining solvent was removed under vacuum leaving 10.4 g of an amber colored oil, having a refractive index of

$$n_d^{25} = 1.5956.$$

The NMR and IR spectra were in agreement with the desired structure.

Example XXI
1-Methylethyl N-(chloromethoxyphosphinothioyl)-N,N-dimethylcarbamimidothioate

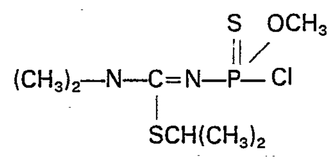

To a solution of 14.3 g of O-methyl phosphorodichloridothioate in 120 ml of acetonitrile was added dropwise in a solution of 12.7 g of 1-methylethyl N,N-dimethylcarbamimidothioate in 25 ml of acetonitrile. The temperature during the addition was kept between 5° to 7°C and was then allowed to rise to room temperature. After stirring overnight, the solvent was removed under vacuum, the residue dissolved in methylene chloride, the methylene chloride solution washed thrice with water, once with saturated sodium chloride solution and dried over anhydrous magnesium sulfate. The solvent was removed under vacuum and the residue was repeatedly extracted with hexane. The hexane extract was concentrated under vacuum to give 7.9 g of desired product. The NMR spectrum was in agreement with the structural assignment.

**Claims**

1. A method for the kill and control of sucking and boring-type insects which attack plants which comprises contacting the insects or their habitat with a composition which comprises an inert carrier in intimate admixture with an insecticidally effective amount of at least one active compound of the formula

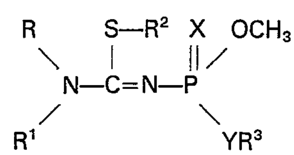

wherein

R and $R^1$ are each independently a methyl or ethyl group or

R and $R^1$ when taken together represent an alkylene group containing 4 to 6 carbon atoms or a group of the formula

$$-(CH_2CH_2)_2A$$

wherein

A is oxygen, sulfur or

$$-\overset{|}{N}R,$$

wherein R is as defined above;

$R^2$ and $R^3$ are each independently an alkyl group containing 1 to 4 carbon atoms and

X and Y represent oxygen or sulfur, with the proviso that X and Y are not the same.

2. A method as claimed in claim 1 wherein X is oxygen in the compound of formula I.

3. A method as claimed in claim 2 wherein the compound of formula I is methyl N' - (methoxy(methylthio)phosphinyl) - N,N - dimethylcarbamimidothioate.

4. A method as claimed in claim 2 wherein the compound of formula I is 1-methylethyl N' - (methoxy(methylthio)phosphinyl) - N,N - dimethylcarbamimidothioate.

5. A method as claimed in claim 2 wherein the compound of formula I is methyl N' - (methoxy(ethylthio)phosphinyl) - N,N - dimethylcarbamimidothioate.

6. A method as claimed in claim 2 wherein the compound of formula I is n-propyl N' - (methoxy(methylthio)phosphinyl) - N,N - dimethylcarbamimidothioate.

7. A method as claimed in claim 2 wherein the compound of formula I is methyl N' - (methoxy(methylthio)phosphinyl) - 4 - morpholinecarboximidothioate.

8. A method as claimed in claim 2 wherein the compound of formula I is methyl N' - (methoxy(methylthio)phosphinyl) - N,N - diethylcarbamimidothioate.

9. A method as claimed in claim 1 wherein X is sulfur in the compound of formula I.

10. A method as claimed in claim 9 wherein the compound of formula I is methyl N' - (ethoxy(methoxy)phosphinothioyl) - N,N - dimethylcarbamimidothioate.

11. A method as claimed in claim 9 wherein the compound of formula I is methyl N - (dimethoxyphosphinothioyl) - 4 - morpholinecarboximidothioate.

12. A method as claimed in claim 9 wherein the compound of formula I is methyl N' - (dimethoxyphosphinothioyl) - N,N - dimethylcarbamimidothioate.

**Patentansprüche**

1. Verfahren zur Abtötung und Kontrolle von pflanzenschädigenden Insekten der saugenden und bohrenden Art, dadurch gekennzeichnet, daß man die Insekten oder ihr Habitat mit einer Zusammensetzung in Kontakt bringt, die einen inerten Träger in inniger Mischung mit einer insektizid wirksamen Menge von mindestens einer aktiven Verbindung der Formel

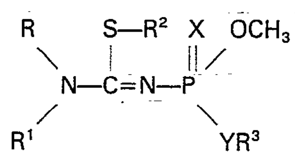

umfaßt, worin

R und $R^1$ unabhängig voneinander eine Methyl- oder Äthylgruppe sind, oder

R und $R^1$, zusammen genommen, eine Alkylengruppe mit 4 bis 6 Kohlenstoffatomen oder eine Gruppe der Formel

$$-(CH_2CH_2)_2A$$

darstellen,

worin A Sauerstoff, Schwefel oder

$$-\overset{|}{N}R$$

ist, wobei R die oben angegebene Bedeutung besitzt;

$R^2$ und $R^3$ unabhängig voneinander eine Alkylgruppe mit 1 bis 4 Kohlenstoffatomen sind, und

X und Y Sauerstoff oder Schwefel darstellen, mit der Maßgabe, daß X und Y nicht gleich sind.

2. Verfahren nach Anspruch 1, dadurch gekennzeichnet, daß in der Verbindung der Formel I X Sauerstoff ist.

3. Verfahren nach Anspruch 2, dadurch gekennzeichnet, daß die Verbindung der Formel I Methyl - N' - (methoxy(methylthio) - phosphinyl) - N,N - dimethylcarbamimidothioat ist.

4. Verfahren nach Anspruch 2, dadurch gekennzeichnet, daß die Verbindung der Formel I 1 - Methyläthyl - N' - (methoxy(methylthio) - phosphinyl) - N,N - dimethylcarbamimidothioat ist.

5. Verfahren nach Anspruch 2, dadurch gekennzeichnet, daß die Verbindung der Formel I Methyl - N' - (methoxy(äthylthio) - phosphinyl - N,N - dimethylcarbamimidothioat ist.

6. Verfahren nach Anspruch 2, dadurch gekennzeichnet, daß die Verbindung der Formel I n - Propyl - N' - (methoxy(methylthio) - phosphinyl) - N,N - dimethylcarbamimidothioat ist.

7. Verfahren nach Anspruch 2, dadurch gekennzeichnet, daß die Verbindung der Formel I Methyl - N' - (methoxy(methylthio) - phosphinyl) - 4 - morpholincarboximidothioat ist.

8. Verfahren nach Anspruch 2, dadurch gekennzeichnet, daß die Verbindung der Formel I Methyl - N' - (methoxy(methylthio) - phosphinyl) - N,N - diäthylcarbamimidothioat ist.

9. Verfahren nach Anspruch 1, dadurch gekennzeichnet, daß in der Verbindung der Formel I X Schwefel ist.

10. Verfahren nach Anspruch 9, dadurch gekennzeichnet, daß die Verbindung der Formel I Methyl - N' - (äthoxy(methoxy)phosphinothioyl) - N,N - dimethylcarbamimidothioat ist.

11. Verfahren nach Anspruch 9, dadurch gekennzeichnet, daß die Verbindung der Formel I Methyl - N - (dimethoxyphosphinothioyl) - 4 - morpholincarboximidothioat ist.

12. Verfahren nach Anspruch 9, dadurch gekennzeichnet, daß die Verbindung der Formel I Methyl - N' - (dimethoxyphosphinothioyl) - N,N - dimethylcarbamimidothioat ist.

## Revendications

1. Procédé pour la lutte contre et la destruction des insectes de type suceur et térébrant attaquant les plantes, qui comprend la mise en contact des insectes ou de leur habitat avec une composition qui comprend un vecteur inerte en mélange intime avec une quantité efficace du point de vue insecticide d'au moins un composé actif de formule

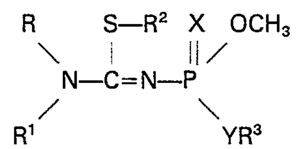

dans laquelle

R et $R^1$ sont chacun, indépendamment l'un de l'autre, un groupe méthyle ou éthyle, ou

R et $R^1$ lorsqu'ils sont considérés ensemble représentent un groupe alkylène contenant de 4 à 6 atomes de carbone ou un groupe de formule

$$-(CH_2CH_2)_2A$$

dans laquelle

A est un atome d'oxygène, de soufre ou

|
—NR,

R étant tel que défini ci-dessus;

$R^2$ et $R^3$ sont chacun, indépendamment l'un de l'autre, un groupe alkyle contenant de 1 à 4 atomes de carbone et

X et Y représentent un atome d'oxygène ou de soufre, sous réserve que X et Y ne soient pas identiques.

2. Procédé selon la revendication 1, dans lequel X est un atome d'oxygène dans le composé de formule I.

3. Procédé selon la revendication 2, dans lequel le composé de formule I est le N' - [méthoxy(méthylthio)phosphinyl] - N,N - diméthylcarbamimidothioate de méthyle.

4. Procédé selon la revendication 2, dans lequel le composé de formule I est le N' - [méthoxy(méthylthio)phosphinyl] - N,N - diméthylcarbamimidothioate de 1-méthyléthyle.

5. Procédé selon la revendication 2, dans lequel le composé de formule I est le N' - [méthoxy(éthylthio)phosphinyl] - N,N - diméthylcarbamimidothioate de méthyle.

6. Procédé selon la revendication 2, dans lequel le composé de formule I est le N' - [méthoxy(méthylthio)phosphinyl] - N,N - diméthylcarbamimidothioate de n-propyle.

7. Procédé selon la revendication 2, dans lequel le composé de formule I est le N' - [méthoxy(méthylthio)phosphinyl] - 4 - morpholinecarboximidothioate de méthyle.

8. Procédé selon la revendication 2, dans lequel le composé de formule I est le N' - [méthoxy(méthylthio)phosphinyl] - N,N - diéthylcarbamimidothioate de méthyle.

9. Procédé selon la revendication 1, dans lequel X est un atome de soufre dans le composé de formule I.

10. Procédé selon la revendication 9, dans lequel le composé de formule I est le N' - [éthoxy(méthoxy)phosphinothioyl] - N,N - diméthylcarbamimidothioate de méthyle.

11. Procédé selon la revendication 9, dans lequel le composé de formule I est le N - (diméthoxyphosphinothioyl) - 4 - morpholinecarboximidothioate de méthyle.

12. Procédé selon la revendication 9, dans lequel le composé de formule I est le N' - (diméthoxyphosphinothioyl) - N,N - diméthylcarbamimidothioate de méthyle.